Europäisches Patentamt

European Patent Office

Office européen des brevets

(11) Veröffentlichungsnummer: **0 331 264 B1**

## (12) EUROPÄISCHE PATENTSCHRIFT

(45) Veröffentlichungstag der Patentschrift:
07.08.91 Patentblatt 91/32

(51) Int. Cl.⁵: **F16D 23/04, F16D 69/02**

(21) Anmeldenummer: **89200491.2**

(22) Anmeldetag: **28.02.89**

(54) Reibkupplung für KFZ-Getriebe und Verfahren zu deren Herstellung.

(30) Priorität: **03.03.88 DE 3806828**

(43) Veröffentlichungstag der Anmeldung:
**06.09.89 Patentblatt 89/36**

(45) Bekanntmachung des Hinweises auf die
Patenterteilung:
**07.08.91 Patentblatt 91/32**

(84) Benannte Vertragsstaaten:
**FR GB IT SE**

(56) Entgegenhaltungen:
**DE-A- 3 724 000**
**DE-C- 2 744 994**
**DE-C- 3 637 386**

(73) Patentinhaber: **SINTERSTAHL Gesellschaft**
**m.b.H.**
**Hiebelerstrasse 4**
**W-8958 Füssen (DE)**

(72) Erfinder: **Knoss, Walter, Dipl.-Ing.**
**Edelweissstrasse 24**
**W-8958 Füssen-Weissensee (DE)**

(74) Vertreter: **Lohnert, Wolfgang, Dr.**
**Metallwerk Plansee GmbH**
**A-6600 Reutte, Tirol (AT)**

**Beschreibung**

Die Erfindung betrifft eine geschmierte Reibkupplung, insbesondere Synchronring und Gegenkonus für Kfz-Getriebe, mit eine Reibpaarung bildenden Kupplungsteilen aus voneinander verschiedenen Werkstoffen, wobei der Werkstoff der einen Reibfläche der Reibpaarung ein spezifischer Reibwerkstoff mit Reibcharakteristik und der andere ein üblicherweise für Maschinenbauteile verwendeter Werkstoff, insbesondere Stahl ist.

Im Kfz-Getriebebau, insbesondere bei Schaltgetrieben, verstärkte sich in den letzten Jahren die Forderung, mit zunehmend kleiner dimensionierten Getrieben bzw. Getriebebauteilen immer größere Antriebs- und Sychronisationsleistungen zu gewährleisten ("Verbesserte Werkstoffe für Synchronringe", K.H. Matucha, et al., Automobiltechnische Zeitschrift 83,5 (1981), S. 227-230). Als Folge dieser Entwicklung mußten Synchronringe immer filigraner und mit entsprechend verkleinerter Reibfläche gebaut werden. Das Gegenstück der Reibpaarung, in der Regel ein Reibkonus, nahm eine gleichartige Entwicklung. Die pro Flächeneinheit erzielbare Reibleistung wurde durch Material- und Oberflächenstruktur-Verbesserung ebenso gesteigert, wie durch Einengung der Maßtoleranzen und damit verbesserte Kontaktverhältnisse der beiden gegeneinander wirkenden Reibflächen (z.B. DE 25-A-38882, DE-A-3033139, DE-C-2744994, DE-U-7342680).

Neben der Forderung nach kleineren Getriebeabmessungen bestand der Wunsch nach erhöhtem Schaltkomfort, insbesondere nach kürzeren Schaltzeiten. Das bedingt höhere flächenbezogene Reibarbeit. Dadurch wird zum einen die Reibungswärme pro Zeit- und Flächeneinheit erhöht und muß abgeführt werden. Zum anderen muß beim Aufbau des Reibschlusses das Getriebeöl zwischen den gegeneinander wirkenden Reibflächen durch Einbringen von Drainagenuten und/oder -gewinden in die Reibfläche schneller entfernt werden. Aufgrund dieser Entwicklung sind die heute im PKW-Schaltgetriebe vornehmlich verwendeten Messing-Synchronringe oder mit Harz getränkten Papierbeläge in Synchronringen vielfach ebenso an ihrer Leistungsgrenze angelangt wie die im LKW verwendeten Stahl-Synchronringe mit geschliffener flamm- oder plasmagespritzter Molybdän-Beschichtung bzw. mit Mo-Maß-Beschichtung.

In jüngster Vergangenheit führten auf einer Folie aufgetragene Streusinter-Reibbeläge, auf die Reibfläche eines Synchronringes aufgebracht, vornehmlich aufgeschweißt, zu einer wesentlichen Leistungssteigerung von Reibkupplungen in Kfz-Schaltgetrieben (DE-C-3417813). Angesichts der vorerwähnten Forderung nach zunehmend filigraner ausgeführten Synchronringen hat das Einschweißen von vorgefertigten Folien mit Streusinter-Reibbelag jedoch den Nachteil, daß dadurch die Ringdicke selbst und in dessen Folge die zum mechanischen Bruch führende Kraft auf den Basisring verringert werden, wohingegen dessen Bruchfestigkeit wegen der größeren Kraftübertragung noch gesteigert werden sollte. Außerdem sind die Herstellkosten derartiger Ringe vergleichsweise hoch.

Es ist bekannt, für die einzelnen Bauteile einer Reibpaarung voneinander verschiedene Werkstoffe mit unterschiedlichen Reibcharakteristiken zu wählen, um eine Kupplung optimaler Funktion und Lebensdauer zu erhalten. Spezifische Reibwerkstoffe mit guten Reibcharakteristiken zeichnen sich durch die Fähigkeit aus, im Reibkontakt große flächenbezogene Reibarbeit bei gleichzeitig hoher Verschleißfestigkeit zu leisten. Als spezifische Reibwerkstoffe haben sich verschiedene Messinglegierungen, Molybdänbeschichtungen und eine Vielzahl von Sinterbelägen in unterschiedlichen Materialzusammensetzungen besonders bewährt. Als Maßzahl für die Lebensdauer einer Reibpaarung wird die spezifische Belag-Abtragungsrate von der Reibfläche, bzw. — deren Reziprokwert — die Verschleißfestigkeit der beiden Reibwerkstoffe ermittelt. Für die Lebensdauer entsprechender Reibpaarungen hat es sich als ungünstig erwiesen, eine sehr abrasive Reibfläche einer vergleichsweise sehr weichen Gegenfläche gegenüberzustellen und es ist für das Gesamtverschleiß-Verhalten gleichermaßen nachteilig, zwei abrasive, gleich harte Reibflächen gegeneinander wirken zu lassen. Diese Kenntnis dürfte der Grund dafür sein, daß bisher überwiegend nur der Ausgestaltung einer der beiden Reibflächen einer Paarung besondere Beachtung geschenkt wurde, vornehmlich dem Synchronring. Der Gegenkonus wurde in der Regel aus Stahlsorten hoher Oberflächenhärte hergestellt. Die durch eine zerspanende Bearbeitung, in Einzelfällen durch Metall-Spritzschichten geschaffene Synchronring-Reibfläche genügte den gestellten Forderungen hinsichtlich Oberflächenstruktur-Eigenschaften.

Es ist für die Kupplung in Kfz-Schaltgetrieben auch vorgeschlagen worden, die Reibfläche des Synchronringes aus gehärtetem Stahl zu fertigen und die Reibfläche des Gegenkonus mit einer Molybdän-Schicht zu belegen. Gleichzeitig wurde es aber für erforderlich gehalten, die Reibfläche des Synchronringes mit Drainagenuten und/oder -gewinden zur Ölabfuhr zu versehen. Durch diese Maßnahme konnte kein nennenswerter Vorteil gegenüber der Kombination Mo-beschichteter Synchronring und glatter Gegenkonus erzielt werden. Vor allem der Nachteil der Festigkeitsverringerung des Synchronringes durch Einbringen von Drainagenuten bestand unverändert fort.

Aus dem Fachmann geläufigen Gründen müssen Reibkupplungen in Kfz-Getrieben ölgeschmiert gefahren werden. Entsprechend hat der Fachmann eine Reihe von Maßnahmen vorgeschlagen, um die Erhaltung eines Schmierfilms ohne gleichzeitige Erzeugung von hydrodynamischem Druck zwischen den Reibflächen einerseits und möglichst gute Kraftschlüssigkeit zwischen den Reibflächen andererseits zu gewährleisten. So wird in der bereits genannten DE-A-2744994 ausgeführt, den Reibbelag auf Papierbasis mit Kunstharz derart zu tränken, daß er eine rauhe, poröse Oberfläche aufweist, wobei an anderer Stelle des Patentes zusätzlich ausgeführt ist, daß "es sich als besonders günstig erwiesen hat, wenn der verwendete Reibbelag porös und elastisch ist. Aufgrund der Porosität kann der Reibbelag während des Gleichlaufvorganges den ansonsten störenden, auf den Reibflächen liegenden Ölfilm aufnehmen und darüberhinaus während des Arbeitsvorganges abführen." Ergänzend wird gemäß dieser Patentschrift "zweckmäßigerweise der Reibbelag mit axial verlaufenden Nuten versehen, welche der Ölabfuhr und bei Ausbildung scharfkantiger Nuten dem Abstreifen des Öles dienen".

Infolge des elastisch komprimierbaren Papierbelages werden dort jedoch die Poren während des Reibvorganges zugedrückt. Bezüglich Ölverdrängung durch Aufrauhung der Reibfläche wird in der DE-A-2834840 vorgeschlagen, durch Funkenerosion erzeugte punktförmige Vertiefungen in die Reiboberfläche einzubringen, so daß eine Rauhigkeit $R_z$ von 25-50 µm geschaffen wird, anstelle, wie vorbeschrieben, die Reibfläche durch Aufspritzen von Metallschichten oder durch mechanisches Abstrahlen aufzurauhen, oder sie zirkular mit einem feinen Gewinde zu versehen, welches beim Ineinandergreifen zweier Reibflächen Öl aufzunehmen und zu axialen Nuten zu leiten in der Lage sein soll. Gemäß der aufgeführten Patentschrift hat die "Aufrauhung der Konusfläche des Synchronringes den Zweck, den Ölfilm zu durchstoßen und rasch einen Reibkontakt herzustellen". Durch diese Art Oberflächenaufrauhung sollen bessere Reibwerte erzielt werden als über die Aufrauhung mittels aufgespritzter Molybdän-Schicht oder über feine, in die Reibfläche eingebrachte Gewinde. In der Praxis hat sich diese Art Aufrauhung nicht durchsetzen können. Sie ist schon wegen der langen Fertigungszeiten für Massenteile, wie Getriebekupplungen, undenkbar. Die Verbesserungen des Reibverhaltens gegenüber den vergleichbaren, angewendeten Verfahren sind bedeutungslos.

Aufgabe vorliegender Erfindung ist daher die Ausgestaltung einer Reibkupplung, insbesondere Synchronring und Gegenkonus für geschmierte Kfz-Getriebe, welche die guten Reibeigenschaften, insbesondere die Reibwerte und den Reibverschleiß von heute verfügbaren Reibkupplungen zumindest erreicht, daneben aber in Summe wirtschaftlicher zu fertigen ist und längere Lebensdauer aufweist. Vor allem soll jede Materialschwächung des Synchronringes vermieden werden, wie sie durch Einbringen von Drainagegewinden und -nuten oder bei der Herstellung des Synchronringes mit gesondert aufgebrachter Folie mit Streusinter-Reibbelag unvermeidbar ist. Zudem sollte die verfügbare Reibfläche über einen möglichst hohen aktiven Flächenanteil nutzbar sein.

Diese Aufgabe wird erfindungsgemäß durch eine geschmierte Reibkupplung gelöst, bei welcher die Reibfläche aus dem spezifischen Reibwerkstoff porenlos bzw. porenarm und frei von Drainagegewinde ist und daß die Reibgegenfläche aus einem mikroporösen, im Vergleich zum spezifischen Reibwerkstoff harten Sinterwerkstoff aufgebaut ist, einen reibaktiven Flächenanteil A mit 50% < A < 90% der theoretrischen Gesamtreibfläche aufweist und Poren eines mittleren Durchmessers < 300 µm enthält.

Die geschmierte Reibkupplung gemäß Erfindung hat eine Reihe wesentlicher Vorteile gegenüber bekannten Ausführungen.

Bisher war es offensichtlich nicht für erforderlich gehalten bzw. verabsäumt worden, die bekannten technischen Möglichkeiten zur Verbesserung von Reibkupplungen durch konsequent aufeinander abgestimmte Ausgestaltung jedes der beiden Reibteile einer Paarung bei Verlagerung einzelner Maßnahmen auf den einen und anderer Maßnahmen auf den anderen Reibteil entsprechend der jeweils günstigeren Voraussetzungen zu nutzen.

Gemäß der vorliegenden Erfindung wird demgegenüber erstmals für eine Reibkupplung für Kfz-Getriebe vorgeschlagen, die eine der beiden Reibflächen einer Reibpaarung aus einem spezifischen Reibwerkstoff unter Nutzung der vollen geometrischen als aktive Reibfläche zu fertigen und die Gegenfläche der Reibpaarung als Sinterkörper mit poröser Oberfläche zu gestalten. Dabei kann entweder der Synchronring oder der Gegenkonus die gesinterte, poröse Reibfläche aufweisen.

Für den Fall, daß der Synchronring, bzw. der Reibflächenbereich des Synchronringes aus dem spezifischen Reibwerkstoff aufgebaut ist, läßt sich bei der Werkstoffauswahl ohne Schwierigkeiten ein für das Reibverhalten und die mechanische Festigkeit gleichermaßen zufriedenstellender Kompromiß erreichen. Der Werkstoff muß also nicht vordringlich unter dem Gesichtspunkt eines möglichst hohen Reibwertes ausgewählt werden.

Wo bisher der Werkstoff mit maximaler flächenbezogener Reibarbeit, aber nicht befriedigender mechanischer Festigkeit, gerade noch die geforderte Synchronisationsleistung erbrachte, kann jetzt bei voller Flächenausnutzung ein Reibwerkstoff weniger guter spezifischer Reibeigenschaften, aber größerer mechanischer Festigkeit verwendet werden. Die Gründe hierfür sind einsichtig.

Beim Reibschluß ist der spezifische Reibwerkstoff einer Paarung näherungsweise mit seiner gesamten theoretisch verfügbaren Reibfläche in aktivem Reibkontakt, da die reibaktive Fläche (A) nicht durch Nuten, Rillen oder Poren gegenüber der theoretischen Reibfläche auf — wie bisher — nur 10-30% Anteil verkleinert ist. Bei vorgegebener Synchronisationsleistung sind daher die spezifischen Flächenbeanspruchungen und die lokale Erwärmung der Reibfläche kleiner. Die bei der Reibung entstehende, die Belastbarkeit begrenzende, und für den Verschleiß maßgebende Wärme kann über eine vergleichsweise große reibaktive Fläsche in ein großes Volumen abgeführt werden. Das vermindert die Anforderungen an die Verschleißfestigkeit der Reibfläche und erhöht die Lebensdauer der Kupplung. Durch das Wegfallen der Drainagenuten und -gewinde ist das verfügbare Verschleißvolumen des weicheren Reibwerkstoffes gegenüber dem Stand der Technik um das zwei- bis dreifache erhöht, was eine korrespondierende Erhöhung der Lebensdauer und des Schaltkomforts bedeutet.

Die Gegenfläche, als mikroporöser, harter Sinterkörper ausgestaltet, übernimmt infolge der Porenstruktur die rasche Restölverdrängung zwischen den Reibflächen beim Synchronisationsvorgang. Es kann sich kein, die Synchronisation verzögernder, hydrodynamischer Druck zwischen den Reibflächen aufbauen. Soweit erforderlich, werden in der mikroporösen Reibfläche zusätzlich einzelne achsiale Drainagenuten angebracht. Die sinterporöse Reibfläche besitzt und benötigt beim Reibschluß über einen vergleichsweise nur geringen reibaktiven Flächenanteil A (50% < A < 90) Kontakt mit der anderen Fläche der Reibpaarung. Einzelne Nuten im mikroporösen Kupplungsteil bedeuten daher nicht generell eine nachteilige Herabsetzung der übertragbaren Gesamtreibleistung der Kupplung.

Soweit bereits poröse Werkstoffe mit guten Reibeigenschaften verwendet werden, sind diese vergleichsweise weich. Sie besitzen in der Regel eine hohe elastische Komprimierbarkeit. Auch eingeschweißte Folien mit Streusinter-Reibbelag besitzen hohe Elastizität. Das bedeutet bei der Synchronisation lange Schaltwege und als Folge des kleinen in Getrieben verfügbaren Raumangebotes nur verringerte tolerierbare axiale Abrieb-Verschleißreserve. Demgegenüber erfordert die Ausgestaltung einer Reibkupplung gemäß vorliegender Erfindung keine Werkstoffe hoher Eigenelastizität. Die Schaltwege und Schaltzeiten bei der Synchronisation im Kfz-Getriebe sind kurz. Genauigkeitsanforderungen und Verschleißreserve werden durch die Werkstoffelastizität nicht wesentlich mitbestimmt.

Bevorzugte Ausführungsformen der erfindungsgemäßen Reibkupplungen gemäß Unteransprüche und deren Vorteile werden nachfolgend beschrieben.

In der Mehrzahl der Fälle sind Reibkupplungen in Kfz-Getrieben heute so aufgebaut, daß die Synchronringe einen Innenkonus und die Gegenfläche der Reibpaarung am Schalt- bzw. Gangrad einen Außenkonus aufweist. Es sind jedoch auch Ausführungen bekannt und lassen sich gemäß der vorliegenden Erfindung ausführen, bei welchen der Synchronring einen Außenkonus und das Schaltrad einen Innenkonus besitzt, bzw. bei denen die einzelnen Teile der Kupplung eine Reibfläche in Form eines Außenkonus und zusätzlich eine Reibfläche in Form eines Innenkonus aufweisen (Doppelkonussynchronisation). Durch die Vergrößerung der Reibfläche gemäß letzter Ausführung läßt sich die übertragbare Reibleistung wesentlich erhöhen.

Je nach den geforderten Konstruktions- und Dimensionsmerkmalen für eine Reibkupplung kann es vorteilhaft sein, ein Kupplungsteil vollständig als Vollsinterkörper herzustellen oder aber auf einen nicht sintermetallurgisch hergestellten Basiskörper einen den Reibbelag bildenden Sinterkörper aufzubringen. Soweit bisher Sinterkörper als tragende Bauteile in Reibkupplungen verwendet wurden, galt es, diese möglichst porenlos, einheitlich dicht und mit maximal erreichbarer mechanischer Festigkeit herzustellen. Im Unterschied dazu werden bekannte Verfahren der Sintertechnik angewendet, um einen Vollsinterkörper mit der gewünschten Porosität im Bereich der Reibfläche herzustellen. So läßt sich z.B. ein Vollsinterkörper im Basisbereich vollständig dicht und im Bereich der Reibfläche porig gestalten, indem dem Pulverpreßling im Bereich der Reibfläche ein während der anschließenden Sinterung flüchtiger Porenbildner zugegeben wird (DE-PS 1608128). Bei entsprechender Form und Größe des für den Sinterkörper verwendeten Metallpulvers samt Zusatzstoffen läßt sich im Bereich der Reibfläche ein offenporiges Skelett herstellen, oder es können auch nur einzelne, mehrheitlich nicht miteinander verbundene, bis zu einer Tiefe von 0,5-2 mm von der Reiboberfläche reichende Poren geschaffen werden. Die mechanische Festigkeit derartiger Teile liegt in der Regel nur unwesentlich unter derjenigen eines homogen verdichteten Sinterteiles.

Der Kupplungsteil einer geschmierten Reibkupplung für Kfz-Schaltgetriebe mit mikroporöser Struktur der Reibfläche ist als Vollsinterkörper aus Sintereisen, Sinterstahl oder auch aus anderen metallischen und/oder nichtmetallischen Sinterwerkstoffen gefertigt. Er ist nach einer bevorzugten Ausführungsform in einem Kernbereich dicht und fest und in einem auf wenige Millimeter Dicke beschränkte Oberflächenbereiche mikroporös und ggf. zusätzlich oberflächengehärtet. Die Sintertechnik erlaubt nicht nur die Verwendung verschiedenartigster Basiswerkstoffe, sondern auch den homogenen Einbau von metallischen und nichtmetallischen Zusatzstoffen zur Einflußnahme auf die Härte, die Festigkeit und die Reibeigenschaften von Sinterkörpern mit mikroporösen Strukturen. Zur Härte- bzw. Verschleißmodifizierung mikroporöser Sinterkörper aus den vorgenannten Werkstoffen haben sich Keramik- und-/oder Hartmetallzusätze bewährt. Zur Anpassung der Reibeigenschaften derartiger Sinterkörper lassen sich beispielsweise als Zusätze mineralische Stoffe, sowie Graphit, $Mo_2S$, Pb-Stearat, Mn-Sulfid, aber auch reine Metalle wie Blei, Kupfer, Zink und Zinn verwenden. Schließlich können fertige Sinterkörper zur Anpassung der Reibeigenschaften auch noch mit Kunststoffen imprägniert werden, wobei allerdings eine Porenstruktur gemäß vorliegender Erfindung erhalten bleiben muß. Insbesondere Sinterkörper aus Stahl lassen sich im Oberflächenbereich induktivoder einsatzhärten.

Kupplungsteile in der Ausführung als ringförmige poröse Sinterkörper auf massive Basisteile aufgebracht, umfassen sowohl starre und selbstragende, als auch aufgeschrumpfte, aufgesinterte, aufgewalzte oder aufgeschweißte Sinterringe. Poröse Sinterschichten auf massiven Basisteilen lassen sich in einzelnen Fällen auch mittels Aufspritzen sowie thermischer und/oder mechanischer Nachbehandlung der Spritzschicht erzielen.

Mit Hilfe des Rollierens bzw. Walzens der Reiboberfläche von porösen Sinterkörpern läßt sich je nach Härte des Sinterkörpers das Sintermaterial bis in eine Tiefe von 0,2-0,6 mm verdichten und damit die Porenstruktur derart verändern, daß der mittlere Porendurchmesser im Oberflächenbereich kleiner ist als in tieferliegenden Bereichen. Dadurch kann beispielsweise der reibaktive Anteil der porösen Reibfläche ohne Nachteile für die für eine ausreichende Ölabfuhr benötigte Porigkeit erhöht werden.

Im unmittelbaren Oberflächenbereich der Reibfläche eines porösen Sinterkörpers werden nach einer bevorzugten Ausführung mittels mechanischer Umformung elliptische Poren mit der längeren der beiden Ellipsenachsen senkrecht zur Reibrichtung der Reibpaarung ausgestaltet. Poren in metallischen Sinterteilen sind üblicherweise in erster Näherung rund.

Beim heutigen Stand der Sintertechnik für metallische Formkörper können vorgegebene Endabmessungen innerhalb kleinster Toleranzen eingehalten werden. Gleichwohl wird es bei Anwendung vorliegender Erfindung in vielen Fällen vorteilhaft sein, den Sinterkörper mit mikroporöser Oberflächenstruktur nach dem Sintern und ggf. Härten auf Nennmaß zu schleifen. Sinterteile lassen sich mit Hilfe des Sinterprozesses ohne besondere Zusatzmaßnahmen auf ca. 1/10 mm Übermaß fertigen und werden dann auf etwa + − 1/100 mm Abweichung vom Nennmaß geschliffen.

Wie weiter oben ausgeführt wurde, ist bei Ausführungen gemäß vorliegender Erfindung eine Fertigung innerhalb derartig enger Schleif-Maßtoleranzen besonders vorteilhaft, weil für beide Reibflächen einer Reibpaarung vergleichsweise nicht elastische Werkstoffe verwendet werden können. Der Nenn-Reibschluß läßt sich ohne Überwindung eines nennenswerten Elastizitätsbereiches herstellen.

In einer Ausführung gemäß der Erfindung lassen sich auch für im PKW-Bau bis heute vielfach verwendete Messing-Synchronringe wesentlich höhere nominelle flächenspezifische Reibleistungen als bisher erreichen. Der Synchronring aus Messing bedarf in diesem Fall keiner Oberflächenaufrauhung oder der Ausgestaltung von Drainagenuten. Die Wahl der zu verwendenden Messinglegierung richtet sich nach der geforderten Festigkeit für den Zahnkranz des Synchronringes und nicht so sehr nach den Reibwerten der jeweiligen Messinglegierung. Synchronringe aus Messing werden vorteilhafterweise mit einem Gegenkonus aus Sinterstahl mit mikroporöser, gehärteter und geschliffener Reibfläche eingesetzt.

Nach einer weiteren bevorzugten Ausgestaltung der Erfindung ist der Synchronring ein im Bereich der Reibfläche poriger, gehärteter Sinterkörper und der Gegenkonus ist im Bereich der Reibfläche als glatter Messingring bzw. Messing-Hohlkegel ausgestaltet, welcher auf einen entsprechenden Stutzen des Schalt- bzw. Gangrades aufgepreßt, aufgeschrumpft, aufgewalzt, aufrolliert oder aufgeschmiedet ist. Dadurch läßt sich zugleich die engtolerierte Maßhaltigkeit und eine oberflächliche Kaltverfestigung des Belages erzielen. Selbstverständlich wird die Ausführung in Messing immer nur auf den Bereich des Gegenkonus beschränkt bleiben, weil der Werkstoff Messing mit seinen guten Reibeigenschaften für die übrigen Funktionsbereiche eines Gangrades wegen der hohen beim Kraftfahrzeug zu übertragenden Antriebsleistung untauglich ist.

Die Ausführungen der geschmierten Reibkupplung gemäß Erfindung ist nicht auf bestimmte geometrische Konstruktionen beschränkt. In den Vorveröffentlichungen zum Stand der Technik sind beispielsweise geometrische Ausführungsformen von geschmierten Reibkupplungen für Kfz-Schaltgetriebe dargestellt, welche sich auch mit den Merkmalen der vorliegenden Erfindung herstellen lassen.

**Patentansprüche**

1. Geschmierte Reibkupplung für Kfz-Getriebe, insbesondere Synchronring und Gegenkonus, mit eine Reibpaarung bildenden Kupplungsteilen aus voneinander verschiedenen Werkstoffen, wobei der Werkstoff der einen Reibfläche der Reibpaarung ein spezifischer Reibwerkstoff mit Reibcharakteristik und der andere ein üblicherweise für Maschinenbauteile verwendeter Werkstoff, insbesondere Stahl ist, **dadurch gekennzeichnet**, daß die Reibfläche aus dem spezifischen Reibwerkstoff porenlos bzw. porenarm und frei von Drainagegewinde ist und daß die Reibgegenfläche aus einem mikroporösen, im Vergleich zum spezifischen Reibwerkstoff harten Sinterwerkstoff aufgebaut ist, einen reibaktiven Flächenanteil A $50\% < A < 90\%$ der theoretischen Gesamtreibfläche aufweist und Poren eines mittleren Durchmessers < 300µm enthält.

2. Geschmierte Reibkupplung nach Anspruch 1, dadurch gekennzeichnet, daß die einzelnen Kupplungsteile als Außen- und/oder Innenkonus ausgebildete Reibflächen aufweisen.

3. Geschmierte Reibkupplung nach Anspruch 1 und 2, dadurch gekennzeichnet, daß das Kupplungsteil mit der mikroporösen Reib-Gegenfläche ein Vollsinterkörper ist.

4. Geschmierte Reibkupplung nach Anspruch 3, dadurch gekennzeichnet, daß das Kupplungsteil mit der mikroporösen Reib-Gegenfläche axiale Drainagenuten aufweist.

5. Geschmierte Reibkupplung nach Anspruch 1 und 2, dadurch gekennzeichnet, daß das Kupplungsteil mit der mikroporösen Reib-Gegenfläche ein auf einen massiven Grundkörper aufgebrachter poröser Sinterring ist.

6. Geschmierte Reibkupplung nach Anspruch 1 bis 5, dadurch gekennzeichnet, daß die Poren ein zur Ölabfuhr von der Reiboberfläche geeignetes, offenes Leitungssystem bilden.

7. Geschmierte Reibkupplung nach Anspruch 1 bis 6, dadurch gekennzeichnet, daß die Poren von der Reiboberfläche aus bis in 0,5-2 mm Tiefe reichen und mehrheitlich nicht miteinander verbunden sind.

8. Geschmierte Reibkupplung nach Anspruch 1 bis 7, dadurch gekennzeichnet, daß infolge Rollierens der Reibfläche der mittlere Porendurchmesser im Oberflächenbereich bis in eine Tiefe von 0,2-0,6 mm gegenüber demjenigen tieferliegender Poren kleiner ist.

9. Geschmierte Reibkupplung nach Anspruch 1 bis 8, dadurch gekennzeichnet, daß die Porenform an der Reiboberfläche elliptisch ist und die große Hauptachse etwa senkrecht zur Gleitrichtung der Reibpaarung liegt.

10. Geschmierte Reibkupplung nach Anspruch 1 bis 9, dadurch gekennzeichnet, daß der Synchronring aus spezifischem Reibwerkstoff ein nicht poröser Messingring mit glatter Reibfläche ohne Drainagegewinde ist.

11. Geschmierte Reibkupplung nach Anspruch 1 bis 9, dadurch gekennzeichnet, daß auf den Gegenkonus aus Stahl ein die Reibfläche aus spezifischem Reibwerkstoff bildender, nicht poröser Messingring aufgepreßt und/oder aufgeschmiedet, aufgewalzt, aufrolliert bzw. aufgeschrumpft ist.

12. Verfahren zur Herstellung einer geschmierten Reibkupplung nach Anspruch 1 bis 11, dadurch gekennzeichnet, daß ein aus Sinterstahl bestehendes Kupplungsteil mit mikroporöser Reibfläche nach dem Sintern induktiv gehärtet oder einsatzgehärtet wird und die Reiboberfläche anschließend auf Maß geschliffen wird.

## Claims

1. Lubricated friction clutch for motor vehicle drives, in particular a synchronising ring and counter-cone, with clutch parts forming a friction pairing composed of different materials from one another, the material of one friction face of the friction pairing being a specific friction material with friction properties and the other being a material conventionally used for machine components, in particular steel, characterised in that the friction face is constructed of the specific friction material in a poreless manner or with few pores and free of drainage threads, and in that the friction counter-face is constructed of a microporous sintered material which is hard compared to the specific friction material, has a friction-active area A of 50% < A < 90% of the theoretical total driving area, and contains pores of an average diameter of < 300 µm.

2. Lubricated friction clutch according to claim 1, characterised in that the individual clutch parts have friction faces formed as an outer cone and/or and inner cone.

3. Lubricated friction clutch according to claim 1 and 2, characterised in that the clutch part with the microporous friction counter-face is a solid sintered body.

4. Lubricated friction clutch according to claim 3, characterised in that the clutch part with the microporous friction counter-face has axial drainage grooves.

5. Lubricated friction clutch according to claim 1 and 2, characterised in that the clutch part with the microporous friction counter-face is a porous synchronising ring mounted on a solid base body.

6. Lubricated friction clutch according to claim 1 to 5, characterised in that the pores form an open conduit system suitable for discharging oil from the friction surface.

7. Lubricated friction clutch according to claim 1 to 6, characterised in that the pores extend from the friction surface to a depth of 0.5-2 mm and the majority are not interconnected.

8. Lubricated friction clutch according to claim 1 to 7, characterised in that, due to roller-burnishing of the friction face, the average pore diameter in the surface region up to a depth of 0.2-0.6 mm is smaller than that of deeper pores.

9. Lubricated friction clutch according to claim 1 to 8, characterised in that the pore form is elliptical at the friction surface and the large main axis is approximately perpendicular to the slip direction of the friction pairing.

10. Lubricated friction clutch according to claim 1 to 9, characterised in that the synchronising ring composed of specific friction material is a non-porous brass ring with a smooth friction face without drainage threads.

11. Lubricated friction clutch according to claim 1 to 9, characterised in that a non-porous brass ring forming the friction face of specific friction material is pressed and/or forged, rolled, roller-burnished or shrunk on to the counter-cone.

12. Method of manufacturing a lubricated friction clutch according to claim 1 to 11, characterised in that a clutch part consisting of sintered steel with a microporous friction face is hardened inductively or is use-hardened after sintering, and the friction surface is then ground to size.

**Revendications**

1. Embrayage à friction lubrifié destiné à une transmission de véhicule automobile, en particulier à bague de synchroniseur et contre-cône, comportant des demi-accouplements en matières différentes entre elles constituant un appariement à friction, la matière de l'une des surfaces de friction de l'appariement de friction étant une matière de friction spécifique, à caractéristique de friction, et l'autre étant une matière utilisée habituellement pour des composants de machine, en particulier de l'acier, **caractérisé en ce que**, la surface de friction en matière spécifique de friction ne présente pas ou guère de pores et est exempte de filets de drainage, et en ce que la contre-surface de friction est constituée d'une matière frittée à pores microscopiques, relativement dure par rapport à la matière spécifique de friction, présente une proportion de surface active en friction A telle que 50% < A < 90% de la surface totale de friction théorique et contient des pores d'un diamètre moyen < 300 μm.

2. Embrayage à friction lubrifié selon la revendication 1, caractérisé en ce que les divers demi-accouplements comportent des surfaces de friction en forme de cônes extérieurs et/ou intérieurs.

3. Embrayage à friction lubrifié selon la revendication 1 ou 2, caractérisé en ce que le demi-accouplement constituant la contre-surface de friction à pores microscopiques est un corps totalement fritté.

4. Embrayage à friction lubrifié selon la revendication 3, caractérisé en ce que le demi-accouplement à contre-surface de friction à pores microscopiques présente des rainures axiales de drainage.

5. Embrayage à friction lubrifié selon la revendication 1 ou 2, caractérisé en ce que le semi-accouplement à contre-surface de friction à pores microscopiques est une bague frittée poreuse appliquée sur un corps de base massif.

6. Embrayage à friction lubrifié selon l'une des revendications 1 à 5, caractérisé en ce que les pores constituent un système de conduite ouvert, approprié à évacuer l'huile de la surface de friction.

7. Embrayage à friction lubrifié selon l'une des revendications 1 à 6, caractérisé en ce que les pores parviennent jusqu'à une profondeur de 0,5 à 2 mm à partir de la surface de friction et, dans leur majorité, ne sont pas reliés entre eux.

8. Embrayage à friction lubrifié selon l'une des revendications 1 à 7, caractérisé en ce que, par suite d'un écrouissage de la surface au rouleau, le diamètre moyen des pores dans la zone superficielle, jusqu'à une profondeur de 0,2 à 0,6 mm, est plus petit que celui des pores situés à une profondeur plus grande.

9. Embrayage à friction lubrifié selon l'une des revendications 1 à 8, caractérisé en ce que la forme des pores sur la surface de friction est elliptique et en ce que l'axe principal est situé à peu près perpendiculairement à la surface de glissement de l'appariement de friction.

10. Embrayage à friction lubrifié selon l'une des revendications 1 à 9, caracterisé en ce que la bague de synchroniseur en matière de friction spécifique est une bague en laiton non poreuse, à surface de friction plane sans filet de drainage.

11. Embrayage à friction lubrifié selon l'une des revendications 1 à 9, caractérisé en ce qu'une bague en laiton non poreuse, constituant la surface de friction en matière spécifique de friction, est montée à la presse, et/ou par forgeage, laminage, écrouissage au rouleau ou frettage sur le contre-cône en acier.

12. Procédé de fabrication d'un embrayage à friction lubrifié selon l'une des revendications 1 à 11, caractérisé en ce qu'un demi-accouplement à surface de friction à pores microscopiques, en acier fritté, est trempé par induction ou cémenté après le frittage et en ce que la surface de friction est ensuite rectifiée à dimension.